# EUROPEAN PATENT APPLICATION

(11) **EP 2 211 039 A2**
(43) Date of publication of application: **28.07.2010**
(21) Application number: 10151145.9
(22) Date of filing: 20.01.2010
(51) Int. Cl.: F02C 3/30, F02C 6/16, F02C 7/143, F02C 7/16

(54) **Methods and device for augmenting power output of a gas turbine plant**

(30) Priority: 22.01.2009 US 357726
(71) Applicant: General Electric Company, Schenectady, NY 12345 (US)
(72) Inventor: Wilkes, Kevin Wood, Greenville, SC 29615-6199 (US); Snider, David August, Simpsonville, SC 29681 (US); Hannula, Scott Victor, Rexford, NY 12148 (US); Rosson, Randy Scott, Simpsonville, SC 29681 (US)
(74) Representative: Gray, Thomas

(57) **Abstract**

Systems and methods for augmenting power output of a turbine(10) during a transient event are provided. A cooling substance may be provided and at least a portion of the cooling substance may be directed to a compressor inlet (22) of the turbine (10) for a predefined time in order to augment power output of the turbine.

## Description

### FIELD OF THE INVENTION

Embodiments of the invention relate generally to turbines and more specifically, to systems and methods for augmenting power output of a turbine during a transient event.

### BACKGROUND OF THE INVENTION

During the operation of a turbine, situations might arise in which it is desirable to increase the power output of the turbine for a relatively transient period of time. For example, with a turbine that supplies power to a grid, the grid frequency may drop or dip below a target frequency of approximately 50 Hertz or approximately 60 Hertz when electricity demand exceeds supply into the grid. For turbine based power plants, the power capability of a turbine typically decreases as the frequency decreases. Accordingly, in order to provide grid stability during significant frequency dips, the output of a turbine may need to be increased at least temporarily.

As another example, for a turbine that is operating in a power island mode (e.g., a single turbine acting as a power source for a plant or other load), it may be desirable to temporarily increase the output of the turbine based on transient load events. For example, when a new load is added to the power island, the initial start up may draw a relatively large amount of power for a period of time before reaching a steady state operation. This transient power draw may result in a load that exceeds the capability of the turbine. As yet another example, transient situations that draw a relatively large amount of power may exist in various mechanical drive applications, such as liquid natural gas (LNG) pumps, other pumps, or other industrial equipment. These transient situations may also lead to an increased load that exceeds the capability of the turbine. If a load exceeds the capabilities of a turbine, the frequency within the turbine will decrease, thereby leading to decreased power output. Thus, it is desirable to temporarily increase the power output of the turbine during these transient situations.

Conventional techniques for increasing the output of a turbine, such as a gas turbine, are to increase the compressor mass flow of the turbine or overfire the turbine by increasing the fuel flow for the turbine. An increase in compressor mass flow, however, may be limited by operational limitations of the turbine, such as a compressor surge margin. An increase in fuel flow of the turbine may be limited by parts life and maintenance consideration. Increasing the fuel flow of the turbine may result in operation of the turbine at beyond normal operating temperatures, leading to degradation of turbine components.

Accordingly, there is a need for systems and methods for augmenting power output of a turbine during a transient event. Additionally, there is a need for systems and methods for augmenting power output of a turbine during a transient event without requiring the turbine to be fired at higher than normal operating temperatures.

### BRIEF DESCRIPTION OF THE INVENTION

According to one embodiment of the invention, there is disclosed a method for augmenting power output in a turbine. A cooling substance may be provided and at least a portion of the cooling substance may be directed to a compressor inlet of the turbine for a period of time in order to augment power output of the turbine.

According to another embodiment of the invention, there is disclosed a system for augmenting power output in a turbine. The system may include a cooling substance supply, at least one conduit, at least one valve, and one or more controllers. The at least one conduit may be operable to direct at least a portion of a cooling substance from the cooling substance supply to a compressor inlet of the turbine. The at least one valve may be selectively actuated to control the direction of the at least a portion of the cooling substance through the at least one conduit. The one or more controllers may be operable to receive data associated with the operation of the turbine and selectively actuate the at least one valve based at least in part on the received data.

According to yet another embodiment of the invention, there is disclosed a method for increasing power output to a load by a turbine. A cooling substance may be provided. An event in which the load will draw more than a predetermined amount of power may be identified. Based at least in part on the identified event, at least a portion of the cooling substance may be directed to a compressor inlet of the turbine to increase power output of the turbine.

Other embodiments, aspects, and features of the invention will become apparent to those skilled in the art from the following detailed description, the accompanying drawings, and the appended claims.

### BRIEF DESCRIPTION OF THE DRAWINGS:

There follows a detailed description of embodiments of the invention by way of example only with reference to the accompanying drawings, in which:
FIG. 1 is a schematic diagram of an example gas turbine plant incorporating a compressor inlet cooling arrangement in accordance with various example embodiments of the invention;
FIG. 2 is a block diagram of an example turbine operating in an island mode that may be utilized in accordance with various example embodiments of the invention; and
FIG. 3 is a flowchart illustrating one example method for augmenting the power output by a turbine in accordance with an illustrative embodiment of the invention.

### DETAILED DESCRIPTION OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

For purposes of this disclosure, the term "power island" may refer to a system in which a single turbine provides power to one or more loads. Any number of loads may be powered by the turbine as desired in various embodiments of the invention, for example, a power plant, a power grid, a generator, a small town, etc.

For purposes of this disclosure, the term "mechanical drive application" may refer to any device, system, combination of devices, and/or combination of systems that receive power from a power source, such as a turbine, and convert the power into mechanical work. Examples of mechanical drive applications include, but are not limited to, liquid natural gas (LNG) pumps, other pumps, and other industrial equipment.

Disclosed are systems and methods for augmenting power output of a turbine, such as a gas turbine. A supply of a cooling substance, for example, liquefied air may be provided. In order to augment the power output of the turbine, at least a portion of the supplied cooling substance may be directed to a compressor inlet of the turbine. For example, in order to increase the power output of the turbine, liquefied air may be directed to and/or expanded at the compressor inlet of the turbine. The direction of liquefied air to the compressor inlet of the turbine may facilitate an increase in the power output of the turbine for a period of time in which the liquefied air is provided. In certain embodiments of the invention, such as period of time may correspond to a predetermined event, for example, a transient event associated with a load of the turbine. In this regard, the liquefied air may be directed to the compressor inlet for a predetermined period of time corresponding to the event.

The technical effect of various embodiments of the invention is to augment power output of a turbine by providing a cooling substance to a compressor inlet of the turbine. In example embodiments of the invention, liquefied air may be expanded at a compressor inlet of the turbine for a predetermined period of time in order to account for increased power output requirements attributable to a transient event occurring in a load that is supplied by the turbine.

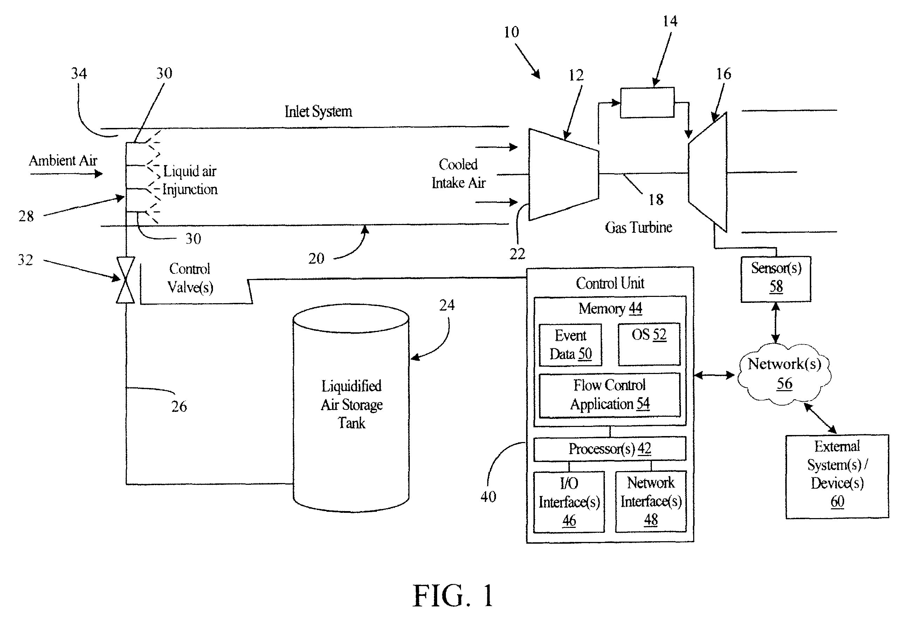

With reference to FIG. 1, a schematic diagram of an example turbine plant 10 incorporating a compressor inlet cooling arrangement in accordance with various example embodiments of the invention is illustrated. The turbine plant 10 shown in FIG. 1 may include a suitable turbine, such as a gas turbine. The gas turbine may include a compressor 12, a combustor 14, and a turbine component 16. For purposes of this disclosure, the turbine component 16 may be referred to as the turbine 16. The compressor 12 may be a multistage compressor that supplies air to the combustor 14 which, in turn, supplies hot combustion gases to the gas turbine component 16. Similar to the compressor 12, the gas turbine component 16 may be a multistage component as desired in various embodiments of the invention. As illustrated, the compressor 12 and turbine 16 may operate on a common rotor shaft 18 which may also be connected to a generator (not shown) downstream of the turbine 16. Other turbine arrangements and/or other types of turbines may also incorporate, make use of, and/or be associated with various embodiments of the invention.

In various embodiments of the invention, a cooling substance may be provided. An example of a suitable cooling substance is liquefied air. Liquefied air is air that has been cooled to relatively low temperatures by means of compression and heat removal. It has a density of about 870 kg/m³, which may vary depending on the elemental composition of the air. The cooling substance may facilitate the provision of a cooled gas, such as cooled air, to an inlet 22 of the compressor 12. The provision of cooled air as intake air for the compressor 12 may increase the power output of the turbine plant 10.

In accordance with an example but non-limiting embodiment of the invention, an inlet system 20 may be utilized to supply cooled intake air to an inlet 22 of the compressor 12. For example, a substantially open-ended inlet plenum 20 to the compressor 12 may be arranged to supply cooled intake air to the compressor inlet 22. Liquefied air may be provided to the inlet plenum 20 and expanded within the inlet plenum 22. As the liquefied air is expanded, at least a portion of the liquefied air may be converted into relatively cool air that may be provided to the compressor inlet 22.

With continued reference to FIG. 1, at least one storage tank 24 may be provided to supply liquefied air via one or more respective conduits 26 to the inlet system 20. In certain embodiments of the invention, an injection manifold 28 may receive the liquefied air from the one or more conduits 26 and provide the liquefied air to the inlet plenum via one or more nozzles 30 that are incorporated into the injection manifold 28. As desired in various embodiments of the invention, the liquefied air injection may be controlled by one or more control valves 32 in the conduit 24, upstream of the manifold 28 and nozzles 30. The one or more control valves 32 may be selectively actuated to permit the flow of the liquefied air through the one or more conduits 26. The actuation of the one or more control valves 32 may be manually controlled and/or controlled by any number of suitable control units, such as control unit 40 that is discussed in greater detail below.

Placement of the manifold 28 and associated nozzles 30 may be varied within the plenum 20 as desired in various embodiments of the invention. For example, by locating the nozzles closer to the plenum inlet 34, a relatively more uniform temperature may be achieved as the air flows toward the compressor inlet 22, but some undesirable temperature increase along the path may result. Relatively cooler but less uniform temperature may be achieved by placing the manifold 28 and associated nozzles 30 closer to the compressor inlet 22. Thus, the exact placement of the plenum 28 and nozzles 30 may vary as desired in various embodiments of the invention.

With continued reference to FIG. 1, a control unit 40 may be provided in certain embodiments of the invention to control the actuation of the one or more control valves 32. The control unit 40 may be a suitable processor driven device that is capable of providing an electronic signal to the one or more valves 32 that facilitates the actuation of the valves 32. Examples of suitable control units include, but are not limited to, application specific circuits, microcontrollers, minicomputers, personal computers, servers, and the like. The control unit 40 may include any number of processors 42 that facilitate the execution of computer-readable instructions to control the operations of the control unit 40. By executing computer-readable instructions associated with determining when to actuate the one or more control valves 32, the control unit 40 may form a special purpose computer that controls the supply of a cooling substance to the inlet 22 of the turbine compressor 12.

In addition to one or more processor(s) 42, the control unit 40 may include one or more memory devices 44, one or more input/output ("I/O") interfaces 46, and one or more network interfaces 48. The one or more memory devices 44 may be any suitable memory devices for example, caches, read only memory devices, random access memory devices, magnetic storage devices, etc. The one or more memory devices 44 may store data, executable instructions, and/or various program modules utilized by the control unit 40, for example, event data 50, an operating system 52, and/or a flow control application 54. The event data 50 may include stored data associated with the operation of the turbine plant 10, stored data associated with a load that is powered by the turbine plant 10, and/or data associated with one or more planned events. Examples of data associated with the turbine plant 10 include measurements data associated with a power output of the turbine 16, data associated with a frequency of a power signal output by the turbine 16, an air intake temperature of the compressor 12, and/or other data associated with the operation of the turbine plant 10. Examples of data associated with a load powered by the turbine plant 10 include measurements data associated with a frequency of a signal provided to the load and/or data associated with an amount of power that is drawn by the load. Examples of planned events include planned transient events in which the power drawn by a load may be greater than a predetermined or target power amount, such as, an initial start-up of a mechanical drive application or a power draw of a grid during a peak time.

In certain embodiments of the invention, the control unit 40 may include any number of software applications that are executed to facilitate the operations of the control unit 40. The software applications may include computer-readable instructions that are executable by the one or more processors 42. The execution of the computer-readable instructions may form a special purpose computer that facilitates the selective actuation of the one or more control valves 32. As an example of a software application, the control unit 40 may include an operating system ("OS") 52 that controls the general operation of the control unit 52 and that facilitates the execution of additional software applications. The control unit 40 may also include a flow control application 54 that is operable to control the actuation of the one or more control valves 32. The flow control application 54 may receive various data, such as data associated with the operation of the turbine plant 10, data associated with the load, and/or data associated with one or more planned events, and the flow control application 54 may direct the storage of received data in the one or more memory devices 44 as desired in various embodiments of the invention. The flow control application 54 may process at least a portion of the data to identify or determine an event or situation in which power output of the turbine 16 should be augmented, for example, a transient event in which the load draws greater than a predetermined amount of power. The flow control application 54 may selectively actuate or control the actuation of the one or more valves 32 in order to supply a cooling substance to the inlet system 20 of the compressor 22 during an identified or determined event. In some instances, the identification of an invent may include the identification of an expected or anticipated event in which the power output of the turbine 16 should be augmented. In this regard, the power output of the turbine 16 may be augmented throughout the course of the event.

The one or more I/O interfaces 46 may facilitate communication between the control unit 40 and one or more input/output devices, for example, a universal serial bus port, a serial port, a disk drive, a CD-ROM drive, and/or one or more user interface devices, such as, a display, keyboard, keypad, mouse, control panel, touch screen display, microphone, etc. that facilitate user interaction with the control unit 40. The one or more I/O interfaces may be utilized to receive or collect event data and/or user instructions from a wide variety of input devices. Received data may be processed by the flow control application 40 as desired in various embodiments of the invention and/or stored in the one or more memory devices 44.

The one or more network interfaces 48 may facilitate connection of the control unit 40 to one or more suitable networks 56, for example, a local area network, a wide area network, the Internet, any wired network, any wireless network, etc. In this regard, the control unit 40 may receive measurements data, other event data and/or instructions from one or more external devices, network components, and/or systems via the one or more networks 56. For example, the control unit 40 may receive measurements data associated with the turbine plant 10 and/or a load powered by the turbine plant 10 from any number of suitable sensors 58 or other measurements devices via the one or more networks 56. The sensors 58 may include any suitable sensors as desired in various embodiments of the invention. As another example, the control unit 40 may receive event data and/or instructions from one or more external systems and/or devices 60 as desired in various embodiments of the invention via the one or more suitable networks 56.

The above-described inlet arrangement may allow short term output power augmentation by injecting liquefied air into the inlet system of the compressor 12 to thereby decrease the temperature of the ambient air entering the compressor 12. The decrease in temperature with increased flow of liquid Air, increases the power output of the gas turbine 16, at least temporarily, to a level that would otherwise require the turbine 16 to be fired beyond its normal operating temperatures. In certain embodiments, the power output of the turbine may be increased beyond the normal capabilities of the turbine.

The control scheme may be one that is based on power output requirements at various frequency levels, or on maintenance of a particular compressor inlet temperature. It may also be advantageous to control the supply of liquefied air via the one or more valves 32 to the minimum amount required to maintain a required output at predetermined frequency levels, i.e., on an intermittent or modulated basis that conserves the expensive liquefied air, with longer replenishment intervals.

In certain embodiments, the control scheme may also facilitate maintaining a system frequency within a turbine system. As a load supplied by a turbine draws more power, the control scheme may control the supply of liquefied air via the one or more valves 32 in order to increase the power output of the turbine and maintain a desired frequency within the turbine system. In certain embodiments, the power output of the turbine may be increased beyond the normal turbine capability.

Additionally, in certain embodiments, the actuation of the one or more valves 32 may be manually controlled as desired to facilitate the supply of a cooling substance to the compressor inlet of 22 of a turbine. In this regard, an increase in the output of the turbine may be manually controlled.

It will be appreciated that the power augmentation achieved by additional compressor mass flow as described herein may improve compressor surge margin and parts life within the turbine plant 10.

A wide variety of different turbines and turbine types may be utilized in association with various embodiments of the invention. For example, in certain embodiments, a turbine may be one of several turbines that provides power to a grid. In such an arrangement, the direction of liquefied air to an inlet system 20 of a compressor 22 may be based at least in part on a frequency level within the grid. In other embodiments of the invention, a turbine may be a single turbine that is operating in a power island mode. In other words, the turbine may be a sole source of power for a load, such as a power plant or power grid, that is connected to the turbine. In other embodiments of the invention, the turbine may be utilized to supply power to one or more mechanical drive applications and/or mechanical drive devices. In this type of arrangement, the turbine may be relatively more sensitive to power requirements of the connected load. For example, during certain transient events associated with the load, such as an initial start-up of a mechanical drive application, the power that is drawn by the load may be increased temporarily. By providing liquefied air to an inlet system 20 for a period of time corresponding to the transient event, the power output of the turbine may be increased to account for the transient event.

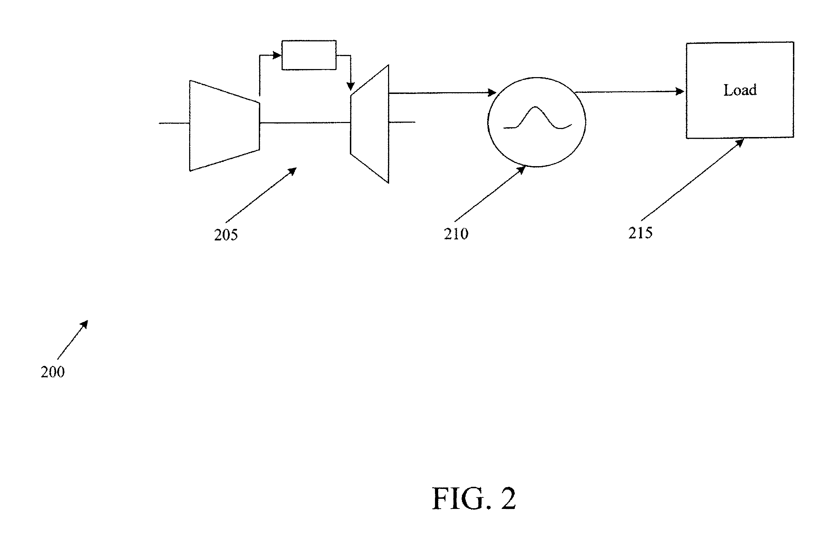

FIG. 2 is a block diagram of an example turbine system 200 that is operating in an island mode that may be utilized in accordance with various example embodiments of the invention. The turbine system 200 may include a turbine 205, a generator 210, and a load 215. The turbine 205 may be any suitable turbine that is operable to supply power to the generator 210, for example, a gas turbine. The turbine 205 may be a sole or single turbine in various embodiments of the invention. The generator 210 may be operable to receive mechanical energy from the turbine 205 and convert the mechanical energy into electrical energy that may be supplied to an electrical load.

The load 215 may include any number of devices that are powered by the turbine 205 and the generator 210. Examples of loads include, but are not limited to, factories, industrial plants, a power grid of a small town, etc. In power island applications, fluctuations in the power that is drawn by the load due to various transient events may have a relatively greater impact on the power output of the turbine that situations in which multiple turbines provide power to a load. Thus, greater stability may be achieved in the system 200 by monitoring the load 215 and/or the turbine 205 to identify transient events, and providing a cooling substance to a compressor inlet of the turbine 205 during a transient event to increase the power output of the turbine 205. A system similar to that illustrated in FIG. 1 may facilitate the supply of a cooling substance, such as liquefied air, to a compressor inlet of the turbine 205.

In addition to operating in a power island mode, a turbine, such as the turbine 205 illustrated in FIG. 2, may be utilized to supply power to one or more mechanical drive devices, mechanical drive applications, and/or other industrial equipment. In such a situation, the mechanical energy of the turbine may be utilized to directly supply power to a mechanical application. In other words, there is no need to utilize a generator in association with mechanical drive devices and/or mechanical drive applications. Similar to a turbine operating in a power island mode, the power output of a turbine that supplies power to one or more mechanical drive devices or applications may be augmented by various embodiments of the invention.

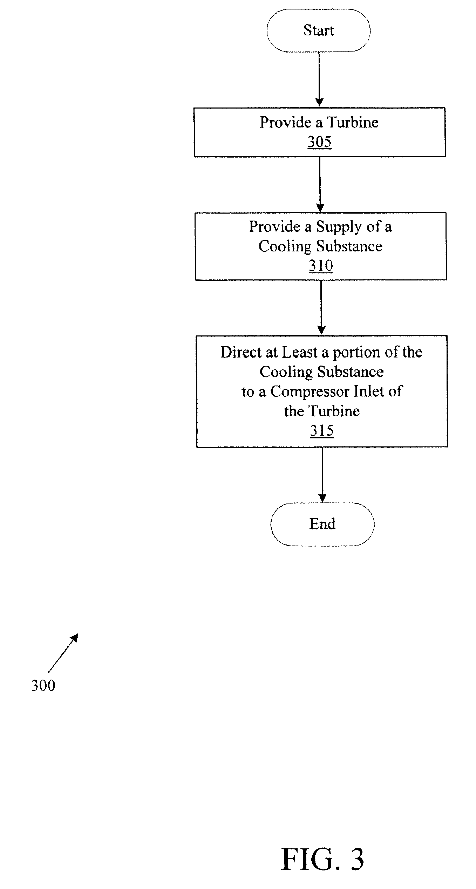

FIG. 3 is a flowchart illustrating one example method 300 for augmenting the power output by a turbine in accordance with an illustrative embodiment of the invention. The method may begin at block 305. At block 305 may be provided. Additionally, at block 310, a supply of a cooling substance, for example, liquefied air, may be provided. The cooling substance may be stored in one or more storage tanks in certain embodiments of the invention.

At block 315, at least a portion of the supply of the cooling substance may be directed to a compressor inlet of the turbine. For example, liquefied air may be expanded and mixed with ambient air to form relatively cool air that may be taken in and utilized by the compressor of the turbine. In certain embodiments, the liquefied air may be expanded in a suitable inlet system, for example, the inlet system 20 illustrated in FIG. 1. As a result of providing relatively cool air to the compressor of the turbine, the power output of the turbine may be increased at least temporarily.

In certain embodiments of the invention, the direction of a cooling substance to the compressor inlet or to an inlet system may be based at least in part on the identification of an event, such as a transient event, in which the load draws or will draw more than a predetermined amount of power. For example, if the load is a mechanical drive application, a start-up of the mechanical drive application may draw a relatively greater amount of power than that drawn during the steady state operation of the mechanical drive application. The identification of the start-up event may facilitate the direction of a cooling substance to the compressor inlet to compensate for the greater amount of power that is drawn. In this regard, greater stability may be maintained in the power system.

The method 300 may end following block 315.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

This written description uses examples to disclose the invention, including the best mode, and also to enable any person skilled in the art to practice the invention, including making and using any devices or systems and performing any incorporated methods. The patentable scope the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method for augmenting power output in a gas turbine (10), the method comprising:
providing a cooling substance;
directing at least a portion of the cooling substance to a compressor inlet (22) of the gas turbine (10) for a period of time.

2. The method of claim 1, wherein providing a cooling substance comprises providing liquefied air.

3. The method of claim 1 or 2, wherein directing at least a portion of the cooling substance to a compressor inlet (22) comprises expanding the at least a portion of the cooling substance in a plenum (20).

4. The method of any of the preceding claims, wherein the gas turbine (10) comprises a gas turbine (10) that supplies power to a grid, and
wherein directing at least a portion of the cooling substance to a compressor inlet (22) of the gas turbine (10) for a period of time comprises directing at least a portion of the cooling substance to a compressor inlet (22) when grid frequency drops below a predetermined target frequency.

5. The method of claim 4, wherein directing at least a portion of the cooling substance to a compressor inlet (22) of the turbine (10) facilitates maintaining power output at one or more predetermined frequency levels.

6. The method of any of the preceding claims, wherein the gas turbine (10) comprises a single gas turbine (205) that supplies power to a load (215).

7. The method of claim 6, wherein directing at least a portion of the cooling substance to a compressor inlet (22) of the turbine (10) for a period of time comprises directing at least a portion of the cooling substance to the compressor inlet (22) when the load (215) draws more than a predetermined amount of power.

8. The method of claim 6, wherein the load (215) comprises a mechanical drive application.

9. The method of any of the preceding claims, further comprises:
providing at least one control valve (32) that is selectively actuated to control the directing of at least a portion of the cooling substance to the compressor inlet (22).

10. A system for augmenting power output in a turbine, the system comprising:
a cooling substance supply;
at least one conduit operable to direct at least a portion of a cooling substance from the cooling substance supply to a compressor inlet of the turbine;
at least one valve that is selectively actuated to control the direction of the at least a portion of the cooling substance through the at least one conduit; and
one or more controllers operable to receive data associated with the operation of the turbine and selectively actuate the at least one valve based at least in part on the received data.

11. The system of claim 10, further comprising:
a plenum that is operable to receive the at least a portion of the cooling substance from the at least one conduit and expand the at least a portion of the cooling substance to provide air to the compressor inlet.

12. The system of claim 10 or 11, wherein the turbine comprises a turbine that supplies power to a grid, and
wherein the at least one valve is actuated during an event when grid frequency drops below a predetermined target frequency.

13. The system of any of claims 10 to 12, wherein the at least one valve is actuated when the load draws more than a predetermined amount of power.

14. The system of any of claims 1 to 13, wherein the data associated with the operation of the turbine comprises at least one of data associated with a characteristic of the turbine or data associated with a load of the turbine.

15. A method for increasing power output of a turbine, the method comprising:
providing a cooling substance;
identifying an event in which a load supplied by the turbine will draw more than a predetermined amount of power; and
directing, based at least in part on the identified event, at least a portion of the cooling substance to a compressor inlet of the turbine to increase power output of the turbine.
